(19) **Europäisches Patentamt**
**European Patent Office**
**Office européen des brevets**

(11) **EP 2 874 305 B1**

(12) **EUROPEAN PATENT SPECIFICATION**

(45) Date of publication and mention
of the grant of the patent:
**19.08.2020 Bulletin 2020/34**

(51) Int Cl.:
***H02P 1/02*** *(2006.01)*　　*H02P 1/28* *(2006.01)*
***H02P 1/30*** *(2006.01)*

(21) Application number: **14189119.2**

(22) Date of filing: **16.10.2014**

(54) **Apparatus for restarting medium voltage inverter**

Vorrichtung zum Neustarten eines Mittelspannungsumwandlers

Appareil pour le redémarrage d'inverseur de moyenne tension

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.10.2013 KR 20130124292**

(43) Date of publication of application:
**20.05.2015 Bulletin 2015/21**

(73) Proprietor: **LSIS Co., Ltd.**
**Anyang-si, Gyeonggi-do 431-848 (KR)**

(72) Inventor: **Yoo, Anno**
**157-918 SEOUL (KR)**

(74) Representative: **K&L Gates LLP**
**Karolinen Karree**
**Karlstraße 12**
**80333 München (DE)**

(56) References cited:
**US-A- 4 734 634　　US-A- 4 839 589**

EP 2 874 305 B1

**EP 2 874 305 B1**

**Description**

BACKGROUND OF THE DISCLOSURE

Field

The teachings in accordance with the exemplary embodiments of this present disclosure generally relate to an apparatus for restarting a medium voltage inverter.

Background

In general, a multilevel medium voltage inverter means an inverter having an input power whose rms (root mean square) value is over 600V for a line-to-line voltage, and has several stages in output phase voltage. The multilevel medium voltage inverter is generally used to drive a large capacity motor ranging from several kW to several MW capacities.

A medium voltage motor driven by a multilevel medium voltage inverter generally has a large inertia, such that a rotor speed of the medium voltage motor hardly decreases to a great extent, even if an inverter unit of the multilevel medium voltage inverter fails to perform a normal operation due to instantaneous failure or instantaneous blackout of input power. Owning to this reason, the medium voltage motor must be re-started after waiting until the rotor speed reaches zero speed when the input power is returned from failure to a normal state.

As one of the prior art, US 4734634 discloses an inverter which is controlled in accordance with open-loop control method, without use of any motor speed detecting means, thus improving control response speed. In reconnection, the inverter is started at a frequency higher than the rotating motor speed and at a voltage lower than the rated value; when a predetermined time has elapsed after the starting voltage was applied to the motor, only the frequency is decreased; when inverter driving current drops below a predetermined value, the frequency is held and only the voltage is increased until the voltage-to-frequency ratio reaches a predetermined value.

As another of the prior art, US 4839589 discloses a method in which at least one of the sinusoidal voltages (US) which is induced in the stator windings by the residual magnetism or remanence of the rotor in a rotating-field machine, the frequency of which corresponds to the rotor speed is converted into a symmetrical square wave signal, (UR), the frequency and the phase of this square wave signal (UR) matching with the frequency and the phase of the induced sinusoidal voltage (US).

SUMMARY OF THE DISCLOSURE

The present disclosure is to provide an apparatus for restarting a medium voltage inverter configured to stably restart the medium voltage inverter by estimating a rotor speed of a medium voltage motor when an input power returns from an instantaneous defective state to a normal state.

In one general aspect of the present disclosure, there is provided an apparatus for restarting a medium voltage inverter configured to provide an inputted power to a motor, the apparatus comprising:

a measurement unit configured to measure an input voltage of the motor;
a controller configured to change a voltage or a frequency from the medium voltage inverter in response to a predetermined voltage-frequency ratio of the medium voltage inverter based on the input voltage and a rotor frequency of the motor; and
an estimation unit (5) configured to detect the rotor frequency of the motor (3) using the input voltage of the motor (3), wherein the estimation unit (5) includes an extraction unit (51) configured to extract a first voltage from a frequency of the input voltage of the motor (3) and a second voltage lagging in phase by 90 degrees from the first voltage, and a first detection unit (52) configured to detect the rotor frequency of the motor (3) based on the first and second voltages,
wherein the extraction unit (51) includes a generation unit (511) configured to generate a first voltage from the frequency of the input voltage of the motor and the second voltage, a second detection unit (512) configured to detect the frequency of the first voltage, and a determination unit (513) configured to determine a bandwidth of the rotor frequency of the motor (3), and
wherein the first detection unit (52) includes a first conversion unit (521) configured to convert the first and second voltages inputted from the extraction unit (51) to a rotation coordinate, a compensation unit (522) configured to compensate an output of the first conversion unit (521) in a proportional integral format, an adder (523) configured to add an output of the compensation unit (522) to an initial frequency, and an integrator (524) configured to integrate an output of the adder (523).

Preferably, but not necessarily, the first detection unit may further include an LPF (Low Pass Filter) configured to low-pass-filter an output of the integrator.

Preferably, but not necessarily, the controller may maintain a frequency of the inverter and increase the voltage until an estimated voltage-frequency ratio reaches a predetermined voltage-frequency ratio when the estimated voltage-frequency ratio is less than the predetermined voltage-frequency ratio.

Preferably, but not necessarily, the controller may increase the voltage and frequency of the inverter in response to the predetermined voltage-frequency ratio when the estimated voltage-frequency ratio is less than the predetermined voltage-frequency ratio.

Preferably, but not necessarily, the controller may maintain a frequency of the inverter and increase the voltage until an estimated voltage-frequency ratio reaches a predetermined voltage-frequency ratio when the estimated voltage-frequency ratio is greater than the predetermined voltage-frequency ratio.

Preferably, but not necessarily, the controller may increase the voltage and frequency of the inverter in response to the predetermined voltage-frequency ratio when the estimated voltage-frequency ratio reaches the predetermined voltage-frequency ratio.

Advantageous Effects of the Disclosure

The present disclosure has an advantageous effect in that a time consumed for re-start can be reduced by re-starting a medium voltage inverter through estimation of a rotor speed of the medium voltage inverter when an input power recovers from an abnormal state to a normal state, because there is no need of waiting for the rotor speed reaches a zero speed.

Brief Description of Drawings

FIG. 1 is a block diagram illustrating a medium voltage inverter system according to an exemplary embodiment of the present disclosure.

FIGS. 2a and 2b are detailed block diagrams each illustrating an estimation unit of FIG. 1.

FIG. 3 is a detailed block diagram illustrating an extraction unit of FIG. 2a.

FIG.4 is a detailed block diagram illustrating a rotor frequency detection unit of FIG. 2a.

FIG. 5 is a detailed block diagram illustrating a voltage component extraction unit of FIG. 2b.

FIG. 6 is a schematic view illustrating a sequence of the medium voltage inverter according to the present disclosure.

FIG. 7 is a schematic view illustrating operation of a controller when an estimated voltage-frequency ratio is less than a predetermined voltage-frequency ratio.

FIG. 8 is a schematic view illustrating operation of a controller when an estimated voltage-frequency ratio is greater than a predetermined voltage-frequency ratio.

Detailed Description of the Disclosure

Various exemplary embodiments will be described more fully hereinafter with reference to the accompanying drawings, in which some exemplary embodiments are shown. The present inventive concept may, however, be embodied in many different forms and should not be construed as limited to the example embodiments set forth herein. Rather, the described aspect is intended to embrace all such alterations, modifications, and variations that fall within the scope and novel idea of the present disclosure.

Hereinafter, exemplary embodiments of the present disclosure will be described in detail with reference to the accompanying drawings.

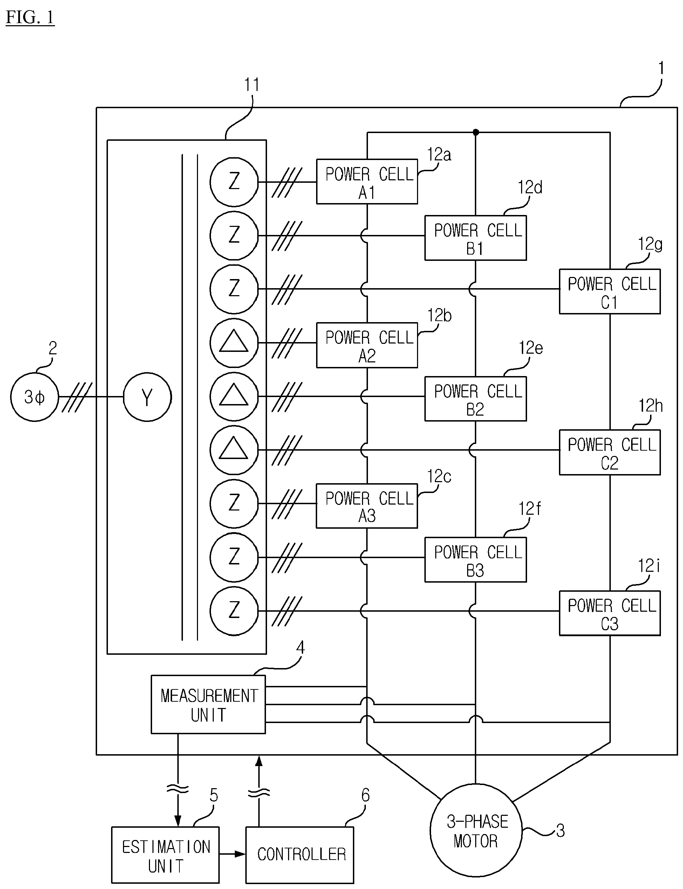

FIG. 1 is a block diagram illustrating a medium voltage inverter system according to an exemplary embodiment of the present disclosure.

Referring to FIG.1, the medium voltage inverter system according to an exemplary embodiment of the present disclosure may include a power unit (2) configured to supply a power to a medium voltage inverter (1) and a high voltage 3-phase motor (3) driven by the medium voltage inverter (1). For example, the medium voltage inverter system according to an exemplary embodiment of the present disclosure may be an induction motor or a synchronous motor, but the present disclosure is not limited thereto.

The medium voltage inverter (1) may include a phase shift transformer (11) and a plurality of unit power cells (12). The phase shift transformer (11) may provide an electrical insulation between the power unit (2) and the medium voltage inverter (1) and may reduce harmonics at an input terminal to provide an input 3-phase power to the unit power cells (12). A phase shift angle of the phase shift transformer (11) may be determined by the number of unit power cells

3

(12). The unit power cells (12) output a phase voltage of the motor (3) by receiving a power from the phase shift transformer (11).

Each unit power cell (12) is constituted by three groups, and although FIG. 1 has illustrated that each group includes three unit power cells, the present disclosure is not limited thereto. Each unit power cell (12) includes a rectification unit, a smoothing unit and an inverter unit and outputs a phase voltage to the motor (3). The configuration of unit power cells will be omitted in detailed description as it is well known to the skilled in the art.

In a conventional system, the medium voltage inverter (1) has a disadvantage of waiting too long before re-start because the re-start is implemented until a rotor speed of the motor (3) reaches a zero speed when an input power is returned from a failed state to a normal state. In order to improve the disadvantage, the medium voltage inverter according to the present disclosure re-starts by estimating a rotor speed of the medium voltage inverter (1) when the input power is returned to a normal state. Thus, a restart device according to the present disclosure in the system thus configured includes a measurement unit (4), an estimation unit (5) and a controller (6).

The measurement unit (4) measures an input voltage of the motor (3). The measurement unit may be a voltage transducer, or a passive element formed with resistors and the like, for example, but the present disclosure is not limited thereto and the measurement unit (4) may be any element capable of measuring a voltage.

The estimation unit (5) estimates a rotor speed of the motor (3) in response to a measurement result of the measurement unit (4). The controller (6) may output a signal controlling an operation of each unit power cell (12) to the medium voltage inverter using the measurement result of the measurement unit (4) and an estimation result of the estimation unit (5). Description of a detailed operation of the controller (6) will be provided later.

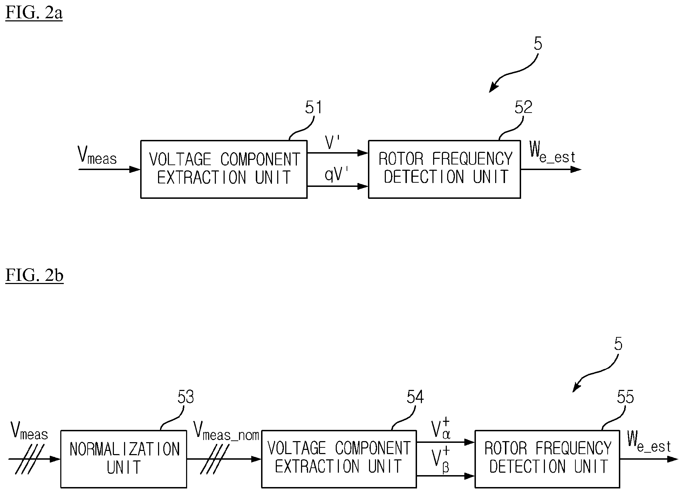

FIGS. 2a and 2b are detailed block diagrams each illustrating an estimation unit (5) of FIG. 1, where FIG. 2a illustrates a case of receiving a single phase voltage from the measurement unit (4) and FIG. 2b illustrates a case of receiving a 3-phase voltage from the measurement unit (4).

Referring to FIG. 2a, the estimation unit (5) may include a voltage component extraction unit (51) and a rotor speed detection unit (52). The voltage component extraction unit (51) extracts a component corresponding to a predetermined voltage and a phase lagging by 90 degrees from the input voltage of the motor (3) measured by the measurement unit (4). The rotor frequency detection unit (52) detects a frequency component from an output of the voltage component extraction unit (51).

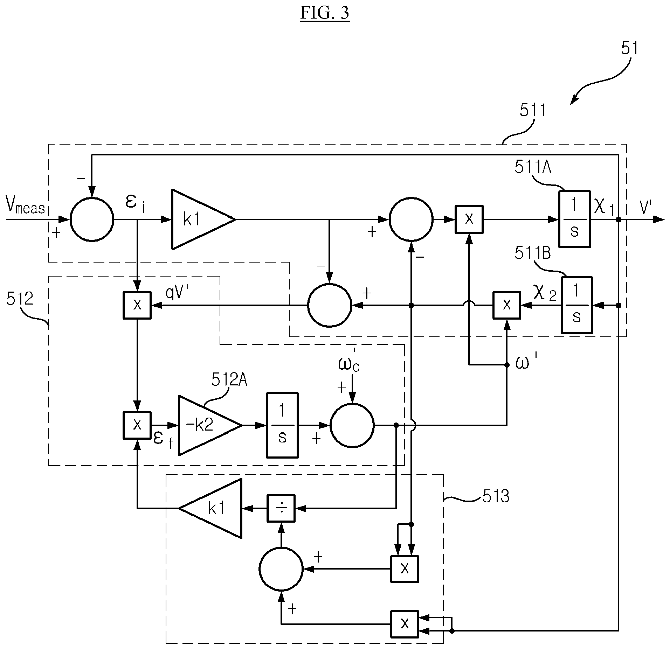

FIG. 3 is a detailed block diagram illustrating a voltage component extraction unit of FIG. 2a, where the extraction unit (51) may include a signal generation unit (511), a frequency detection unit (512) and a control bandwidth determination unit (513).

The signal generation unit (511) generates an AC (Alternating Current) signal V' corresponding to a frequency applied by the medium voltage inverter (1) from the input voltage of the motor (3) measured by the measurement unit (4) and a signal qV' lagging by 90 degrees in phase from V'. If a frequency of the input voltage of the motor (3) is given as $\omega$', V' and qV' determined by the signal generation unit (511) may be expressed by the following Equations.

【Equation 1】

$$D(s)=\frac{V'(s)}{V_{meas}(s)}=\frac{k_1\omega's}{s^2+k_1\omega's+\omega'^2}$$

【Equation 2】

$$Q(s)=\frac{qV'(s)}{V_{meas}(s)}=\frac{k_1\omega'^2}{s^2+k_1\omega's+\omega'^2}$$

Only the frequency component of $\omega$' can be extracted from the input voltage of the motor measured by the Equation 1, and a signal lagging by 90 degrees from the component detected by the Equation 1 can be determined by the Equation 2. Now, operation of the frequency detection unit (512) of FIG. 3 will be explained. When outputs of 511A and 511B of the signal generation unit are respectively defined as $x_1$ and $x_2$, the following equations may be derived:

【Equation 3】

$$\dot{x} = \begin{bmatrix} \dot{x}_1 \\ \dot{x}_2 \end{bmatrix} = Ax + Bv = \begin{bmatrix} -k_1\omega' & -\omega'^2 \\ 1 & 0 \end{bmatrix} \begin{bmatrix} x_1 \\ x_2 \end{bmatrix} + \begin{bmatrix} k_1\omega' \\ 0 \end{bmatrix} V_{meas}$$

【Equation 4】

$$y = \begin{bmatrix} V' \\ qV' \end{bmatrix} = Cx = \begin{bmatrix} 1 & 0 \\ 0 & \omega' \end{bmatrix} \begin{bmatrix} x_1 \\ x_2 \end{bmatrix}$$

At this time, Equation 5 may be expressed as under, and condition of Equation 6 may be satisfied in a normal state.

【Equation 5】

$$\dot{\omega}' = -k_2 x_2 \omega'(V_{meas} - x_1)$$

【Equation 6】

$$\dot{\omega}' = 0$$

$$\omega = \omega'$$

$$x_1 = V_{meas}$$

The following Equation 7 may be derived from Equation 3 using the condition of Equation 6.

【Equation 7】

$$\dot{x}\big|_{\omega'=0} = \begin{bmatrix} \dot{\overline{x}}_1 \\ \dot{\overline{x}}_2 \end{bmatrix} = \begin{bmatrix} 0 & -\omega'^2 \\ 1 & 0 \end{bmatrix} \begin{bmatrix} \overline{x}_1 \\ \overline{x}_2 \end{bmatrix}$$

Equation 8 may be derived from the Equation 7.

【Equation 8】

$$\dot{\overline{x}}_1 = -\omega^2 \overline{x}_2$$

Meantime, operation of control bandwidth determination unit (513) will be explained. The following Equations 9 and 10 may be obtained using average of each variable in FIG. 3.

【Equation 9】

$$\bar{\varepsilon}_i = V_{meas} - \bar{x}_1 = \frac{1}{k_1 \omega'}\left(\dot{\bar{x}}_1 + \omega'^2 \bar{x}_2\right)$$

【Equation 10】

$$\bar{\varepsilon}_{f=\omega'} \bar{x}_2 \bar{\varepsilon}_i = \frac{\bar{x}_2^2}{k_1}\left(\omega'^2 - \omega^2\right)$$

($\omega'^2 - \omega^2$) in the above Equation 10 may be simplified as $2\omega'(\omega' - \omega)(\omega' \cong \omega)$, where an estimation frequency may have the following control bandwidth when using the control bandwidth determination unit (513).

【Equation 11】

$$\frac{\bar{\omega}'}{\omega} = \frac{k_2}{s + k_2}$$

It can be noted that the control bandwidth seeking a desired frequency from the above Equation 11 is determined by gain of an amplification unit (512A) in the frequency detection unit (512). Thus, the gain (k2) of the amplification unit (512A) must be determined by a value higher than an operational frequency of the motor (3). When the motor (3) operates in a normal state, a current frequency that is same as a frequency of a voltage applied by the inverter (1) must be outputted.

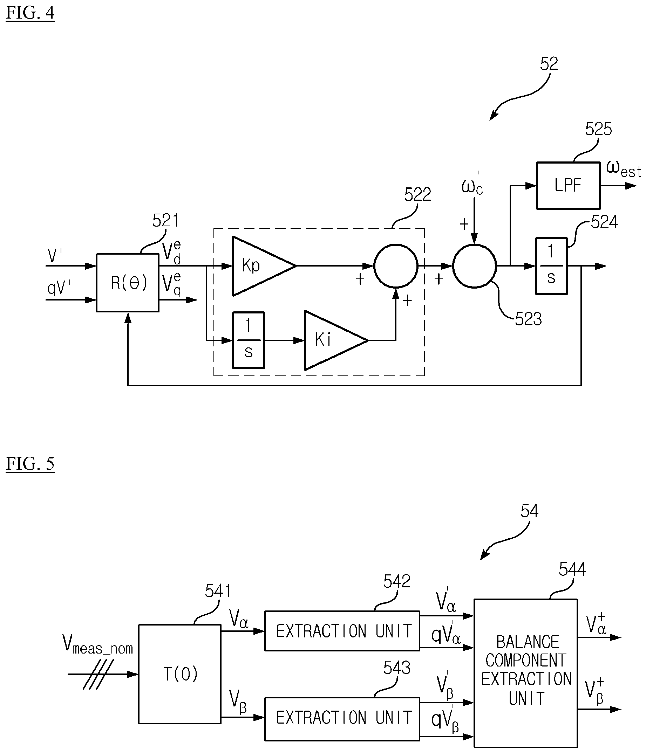

Next, FIG.4 is a detailed block diagram illustrating a rotor frequency detection unit (52) of FIG. 2, where the rotor frequency detection unit (52) may include a coordinate conversion unit (521), a proportional integral compensation unit (522), an addition unit (523), an integral unit (524) and an LPF (low Pass Filter, 525).

The coordinate conversion unit (521) serves to convert an inputted signal to a rotation coordinate and may be defined as under:

【Equation 12】

$$V_d^e = V' \cos\theta + qV' \sin\theta$$

【Equation 13】

$$V_q^e = -V' \sin\theta + qV' \cos\theta$$

The proportional integral compensation unit (522) serves to converge an output $V_d^e$ of the coordinate conversion unit (521) to zero (0), and the addition unit (523) functions to add an initial frequency to an output of the proportional integral compensation unit (522). The output of the addition unit (523) may be integrated by the integral unit (524) and used for coordination conversion of the coordinate conversion unit (521), and may be used for estimation of a final frequency through the LPF (525). However, use of the LPF (525) is optional.

Now, configuration of FIG. 2b will be explained again.

As illustrated in the drawing, the estimation unit (5) may include a normalization unit(53), a voltage component extraction unit (54) and a rotor frequency detection unit (55).

The normalization unit(53) receives an input 3-phase voltage of the motor (3) and normalizes the voltage, but the normalization unit(53) is an optional item. The input voltage of the motor (3) may be defined by the following Equations 14, 15 and 16.

【Equation 14】

$$V_{meas\_as} = V sin\theta$$

【Equation 15】

$$V_{meas\_bs} = V sin\left(\theta - \frac{2}{3\pi}\right)$$

【Equation 16】

$$V_{meas\_cs} = V sin\left(\theta + \frac{2}{3\pi}\right)$$

At this time, when the motor (3) is 3-phased normalized, voltage information of one phase may be calculated from the relationship of the following Equation 17.

【Equation 17】

$$V_{meas\_as} + V_{meas\_bs} + V_{meas\_cs} = 0$$

The following Equation 18 may be defined from the Equation 17.

【Equation 18】

$$V = \frac{2}{\sqrt{3}}\sqrt{-V_{meas\_as}V_{meas\_bs} + V_{meas\_cs}V_{meas\_cs}}$$

The Equation 18 is an example for determining size of an input voltage of the motor (3), where various methods for seeking the size of measured input voltage may exist, and therefore the present disclosure is not limited thereto. An output of the normalization unit(53) may be defined as below using the relationship among the Equations 14 to 18.

【Equation 19】

$$V_{meas\_nom\_as} = \sin\theta$$

【Equation 20】

$$V_{meas\_nom\_bs} = \sin\left(\theta - \frac{2}{3\pi}\right)$$

【Equation 21】

$$V_{meas\_nom\_cs} = \sin\left(\theta + \frac{2}{3\pi}\right)$$

Next, explanation will be provided for the voltage component extraction unit (54) of FIG. 2a.

FIG. 5 is a detailed block diagram illustrating a voltage component extraction unit of FIG. 2b.

Referring to FIG. 5, the voltage component extraction unit (54) according to the present disclosure may include a coordinate conversion unit (541), extraction units (542, 543) and a positive phase sequence component extraction unit (544). The coordinate conversion unit (541) converts a coordinate of 3-phase voltage inputted from the normalization unit(53) using the following Equations:

【Equation 22】

$$V_{\alpha} = \frac{2V_{meas\_nom\_as} - V_{meas\_nom\_bs} - V_{meas\_nom\_cs}}{3}$$

【Equation 23】

$$V_{\beta} = \frac{V_{meas\_nom\_bs} - V_{meas\_nom\_cs}}{\sqrt{3}}$$

The extraction units (542, 543) extract a component corresponding to a predetermined frequency from voltage information inputted from the coordinate conversion unit (541) and a component lagging by 90 degrees in phase. Each of the extraction units (542, 543) is same as that of the voltage component extraction unit (51) of FIG. 3, such that no further elaboration will be omitted. Furthermore, operation of the positive phase sequence component extraction unit (544) may be defined as under:

【Equation 24】

$$V_{\alpha}^{+} = \frac{1}{2}V_{\alpha}' - \frac{1}{2}qV_{\beta}'$$

【Equation 25】

$$V_{\beta}^{+} = \frac{1}{2}qV_{\alpha}' + \frac{1}{2}V_{\beta}'$$

The operation of the rotor frequency detection unit (55) in FIG. 2b is same as that of the rotor frequency detection unit (52) of FIG. 2a, such that no further elaboration will be omitted. At this time, an input of the rotor frequency detection unit (55) is $V_\alpha^+$, $V_\beta^+$ of FIG. 5, and may be same as an output of FIG. 14.

When the voltage frequency of the motor is estimated by the rotor frequency detection unit (52) of FIG. 4, the medium voltage inverter (1) is applied with a voltage corresponding to the estimated voltage and is re-started. At this time, the size of the voltage is applied based on the Equation 18.

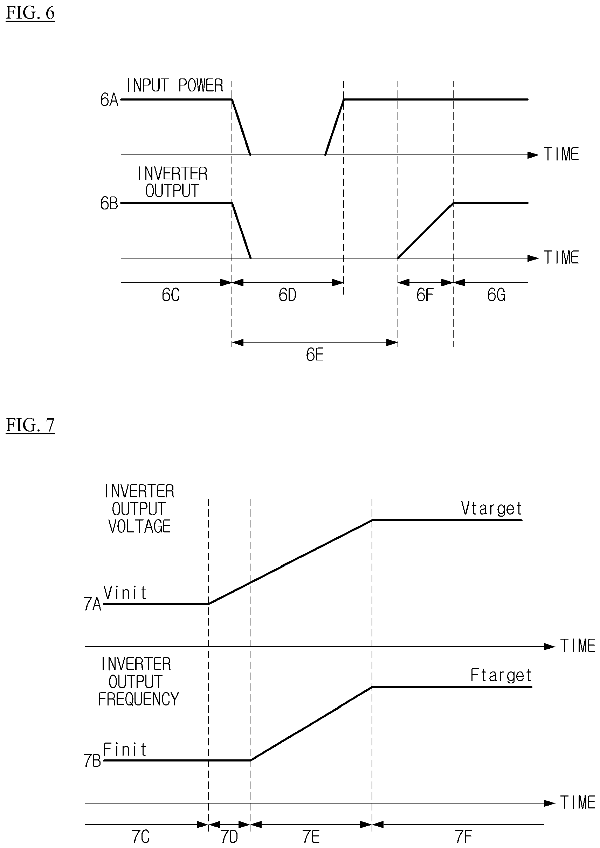

FIG. 6 is a schematic view illustrating a sequence of the medium voltage inverter according to the present disclosure.

6A in FIG. 6 graphically illustrates an input power from the power unit (2) of the inverter (1), and 6B graphically illustrates an output voltage of the inverter. Furthermore, 6C illustrates an area where the power unit (2) and the inverter (1) are all operate normally, and 6D illustrates an area where an output voltage of the inverter (1) is reduced due to generation of abnormality to the input power, 6E illustrates an area where the estimation unit (5) estimates the rotor speed and the size of the motor voltage and 6F illustrates an area where the inverter is re-started by the controller (6) in response to the estimated rotor speed of the motor and size of the voltage. Now, operation of the controller (6) will be described.

In general, the inverter (1) operates in response to a pattern where voltage and frequency are predetermined when running a constant flux operation as V/F operation. If an input power is generated an abnormality to make a ratio between the estimated output voltage and the output frequency smaller or greater than a predetermined value (Vset/Fset), the controller (6) changes the sizes of the voltage or frequency until reaching a predetermined voltage and frequency.

FIG. 7 is a schematic view illustrating operation of a controller when an estimated voltage-frequency ratio is less than a predetermined voltage-frequency ratio and illustrates a segmented operation at 6F section in FIG. 6.

7A in FIG. 7 illustrates an output voltage of the inverter (1), 7B illustrates an output frequency of the inverter (1). Furthermore, an initial voltage (Vinit) which is an output voltage at 7C section may be expressed as by Equation 18, and an initial frequency (Finit) which is an output frequency of the inverter may be same as the output of LPF (525) of FIG. 4.

In 7D area of FIG. 7, the controller (6) maintains the frequency until reaching a predetermined voltage-frequency ratio and increases the voltage. Furthermore, the controller (6) in 7E area simultaneously increases the voltage and the frequency in response to a predetermined voltage-frequency ratio, whereby the inverter (1) can operate in 7F area at a voltage (Vtarget) and a frequency (Ftarget) selected at the time of normal operation.

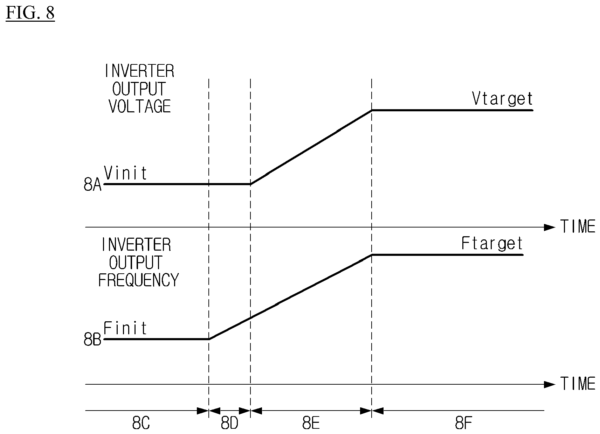

FIG. 8 is a schematic view illustrating operation of a controller when an estimated voltage-frequency ratio is greater than a predetermined voltage-frequency ratio, and illustrates a segmented operation at 6F section in FIG. 6.

8A of FIG. 8 illustrates an output voltage of the inverter (1), and 8B illustrates an output frequency of the inverter (1). Furthermore, an initial voltage (Vinit) in 8C section which is an output voltage of inverter is same as what is shown in FIG. 18, and an initial frequency Finit) which is an output frequency of inverter is same as the output of LPF (525) of FIG. 4.

In 8D area of FIG. 8, the controller (6) increases the frequency until reaching a predetermined voltage-frequency ratio and maintains the voltage. Furthermore, the controller (6) in 8E area simultaneously increases the voltage and the frequency in response to a predetermined voltage-frequency ratio, whereby the inverter (1) can operate in 8F area at a voltage (Vtarget) and a frequency (Ftarget) selected at the time of normal operation.

The apparatus for restarting a medium voltage inverter according to the present disclosure can measure an input voltage of the motor and detect a rotor frequency of a motor by extracting a frequency component of the measured voltage, increase an output voltage or an output frequency of the inverter until reaching a predetermined voltage-frequency ratio, and re-start by simultaneously increasing the output voltage and output frequency when a voltage or a frequency reaches a predetermined voltage-frequency ratio

Although the present disclosure has been described in detail with reference to the foregoing embodiments and advantages, the scope is defined in the appended claims.

## Claims

1. An apparatus for restarting a medium voltage inverter (1) configured to provide an inputted power to a motor (3), the apparatus comprising:

   a measurement unit (4) configured to measure an input voltage of the motor (3); and
   a controller (6) configured to change a voltage or a frequency from the medium voltage inverter (1) in response to a predetermined voltage-frequency ratio of the medium voltage inverter (1) based on the input voltage and a rotor frequency of the motor (3):
   **characterized in that** the apparatus further comprises:

   an estimation unit (5) configured to detect the rotor frequency of the motor (3) using the input voltage of the motor (3),

wherein the estimation unit (5) includes an extraction unit (51) configured to extract a first voltage from a frequency of the input voltage of the motor (3) and a second voltage lagging in phase by 90 degrees from the first voltage, a first detection unit (52) configured to detect the rotor frequency of the motor (3) based on the first and second voltages, and

wherein the extraction unit (51) includes a generation unit (511) configured to extract the first and the second voltage, a second detection unit (512) configured to detect the frequency of the first voltage, and a determination unit (513) configured to determine a bandwidth of the rotor frequency of the motor (3), and

wherein the first detection unit (52) includes a first conversion unit (521) configured to convert the first and second voltages inputted from the extraction unit (51) to a rotation coordinate, a compensation unit (522) configured to compensate an output of the first conversion unit (521) in a proportional integral format, an adder (523) configured to add an output of the compensation unit (522) to an initial frequency, and an integrator (524) configured to integrate an output of the adder (523).

2. The apparatus of claim 1, wherein the first detection unit (52) further includes an LPF (Low Pass Filter) configured to low-pass-filter an input of the integrator (524).

3. The apparatus of claims 1 or 2, wherein the controller (6) maintains a frequency of the inverter(1) and increases the voltage until an estimated voltage-frequency ratio reaches a predetermined voltage-frequency ratio when the estimated voltage-frequency ratio is less than the predetermined voltage-frequency ratio.

4. The apparatus of claim 3, wherein the controller (6) increases the voltage and frequency of the inverter (1) in response to the predetermined voltage-frequency ratio when the estimated voltage-frequency ratio is less than the predetermined voltage-frequency ratio.

5. The apparatus of any one claim from 1 to 4, wherein the controller (6) maintains a frequency of the inverter (1) and increases the voltage until an estimated voltage-frequency ratio reaches a predetermined voltage-frequency ratio when the estimated voltage-frequency ratio is greater than the predetermined voltage-frequency ratio.

6. The apparatus of claim 5, wherein the controller (6) increases the voltage and a frequency of the inverter (1) in response to the predetermined voltage-frequency ratio when the estimated voltage-frequency ratio reaches the predetermined voltage-frequency ratio.

**Patentansprüche**

1. Vorrichtung zum Neustarten eines Mittelspannungs-Wechselrichters (1), der so konfiguriert ist, dass er einem Motor (3) eine Eingangsleistung zuführt, die Vorrichtung umfassend:

eine Messeinheit (4), die zum Messen einer Eingangsspannung des Motors (3) konfiguriert ist; und einen Controller (6), der so konfiguriert ist, dass er eine Spannung oder eine Frequenz des Mittelspannungs-Wechselrichters (1) in Reaktion auf ein vorbestimmtes Spannungs-Frequenz-Verhältnis des Mittelspannungs-Wechselrichters (1) basierend auf der Eingangsspannung und einer Rotorfrequenz des Motors (3) ändert: **dadurch gekennzeichnet, dass** die Vorrichtung ferner umfasst:

eine Schätzeinheit (5), die so konfiguriert ist, dass sie die Rotorfrequenz des Motors (3) unter Nutzung der Eingangsspannung des Motors (3) erfasst,

wobei die Schätzeinheit (5) eine Extraktionseinheit (51) beinhaltet, die so konfiguriert ist, dass sie eine erste Spannung aus einer Frequenz der Eingangsspannung des Motors (3) und eine zweite Spannung, die gegenüber der ersten Spannung um 90 Grad phasenverschoben ist, extrahiert, eine erste Erfassungseinheit (52), die so konfiguriert ist, dass sie die Rotorfrequenz des Motors (3) basierend auf der ersten und der zweiten Spannung erfasst, und

wobei die Extraktionseinheit (51) eine Erzeugungseinheit (511) beinhaltet, die konfiguriert ist, um die erste und die zweite Spannung zu extrahieren, eine zweite Erfassungseinheit (512), die konfiguriert ist, um die Frequenz der ersten Spannung zu erfassen, und eine Bestimmungseinheit (513), die konfiguriert ist, um eine Bandbreite der Rotorfrequenz des Motors (3) zu bestimmen, und

wobei die erste Erfassungseinheit (52) eine erste Umwandlungseinheit (521) beinhaltet, die so konfiguriert ist, dass sie die erste und die zweite Spannung, die von der Extraktionseinheit (51) eingegeben werden, in eine Drehkoordinate umwandelt, eine Kompensationseinheit (522), die so konfiguriert ist, dass sie eine Ausgabe der ersten Umwandlungseinheit (521) in einem proportionalen Integralformat kompensiert, einen Addierer (523), der so konfiguriert ist, dass er eine Ausgabe der Kompensationseinheit (522) zu einer Anfangsfrequenz addiert, und einen Integrator (524), der so konfiguriert ist, dass er eine Ausgabe des Addierers (523) integriert.

2. Vorrichtung nach Anspruch 1, wobei die erste Erfassungseinheit (52) ferner einen LPF (Tiefpassfilter) beinhaltet, der so konfiguriert ist, dass er einen Eingang des Integrators (524) tiefpassfiltert.

3. Vorrichtung nach Anspruch 1 oder 2, wobei der Controller (6) eine Frequenz des Wechselrichters (1) aufrechterhält und die Spannung erhöht, bis ein geschätztes Spannungs-Frequenz-Verhältnis ein vorbestimmtes Spannungs-Frequenz-Verhältnis erreicht, wenn das geschätzte Spannungs-Frequenz-Verhältnis kleiner als das vorbestimmte Spannungs-Frequenz-Verhältnis ist.

4. Vorrichtung nach Anspruch 3, wobei der Controller (6) die Spannung und Frequenz des Wechselrichters (1) in Reaktion auf das vorbestimmte Spannungs-Frequenz-Verhältnis erhöht, wenn das geschätzte Spannungs-Frequenz-Verhältnis kleiner als das vorbestimmte Spannungs-Frequenz-Verhältnis ist.

5. Vorrichtung nach einem der Ansprüche von 1 bis 4, wobei der Controller (6) eine Frequenz des Wechselrichters (1) aufrechterhält und die Spannung erhöht, bis ein geschätztes Spannungs-Frequenz-Verhältnis ein vorbestimmtes Spannungs-Frequenz-Verhältnis erreicht, wenn das geschätzte Spannungs-Frequenz-Verhältnis größer als das vorbestimmte Spannungs-Frequenz-Verhältnis ist.

6. Vorrichtung nach Anspruch 5, wobei der Controller (6) die Spannung und eine Frequenz des Wechselrichters (1) in Reaktion auf das vorbestimmte Spannungs-Frequenz-Verhältnis erhöht, wenn das geschätzte Spannungs-Frequenz-Verhältnis das vorbestimmte Spannungs-Frequenz-Verhältnis erreicht.

## Revendications

1. Appareil pour le redémarrage d'un onduleur à moyenne tension (1) configuré pour fournir une puissance appliquée en entrée à un moteur (3), l'appareil comprenant :

une unité de mesure (4) configurée pour mesurer une tension d'entrée du moteur (3) ; et
un dispositif de commande (6) configuré pour modifier une tension ou une fréquence à partir de l'onduleur à moyenne tension (1) en réponse à un rapport tension-fréquence prédéterminé de l'onduleur à moyenne tension (1) sur la base de la tension d'entrée et d'une fréquence de rotor du moteur (3) :
**caractérisé en ce que** l'appareil comprend en outre :

une unité d'estimation (5) configurée pour détecter la fréquence de rotor du moteur (3) à l'aide de la tension d'entrée du moteur (3),
dans lequel l'unité d'estimation (5) comporte une unité d'extraction (51) configurée pour extraire une première tension à partir d'une fréquence de la tension d'entrée du moteur (3) et une seconde tension avec retard de phase de 90 degrés par rapport à la première tension, une première unité de détection (52) configurée pour détecter la fréquence de rotor du moteur (3) sur la base des première et seconde tensions, et
dans lequel l'unité d'extraction (51) comporte une unité de génération (511) configurée pour extraire la première et la seconde tension, une seconde unité de détection (512) configurée pour détecter la fréquence de la première tension, et une unité de détermination (513) configurée pour déterminer une bande passante de la fréquence de rotor du moteur (3), et
dans lequel la première unité de détection (52) comporte une première unité de conversion (521) configurée pour convertir les première et seconde tensions appliquées en entrée à partir de l'unité d'extraction (51) en une coordonnée de rotation, une unité de compensation (522) configurée pour compenser une sortie de la première unité de conversion (521) dans un format proportionnel intégral, un additionneur (523) configuré pour additionner une sortie de l'unité de compensation (522) à une fréquence initiale, et un intégrateur (524) configuré pour intégrer une sortie de l'additionneur (523).

2. Appareil selon la revendication 1, dans lequel la première unité de détection (52) comporte en outre un LPF (Low Pass Filter [filtre passe-bas]) configuré pour filtrer en passe-bas une entrée de l'intégrateur (524).

3. Appareil selon les revendications 1 ou 2, dans lequel le dispositif de commande (6) maintient une fréquence de l'onduleur (1) et augmente la tension jusqu'à ce qu'un rapport tension-fréquence estimé atteigne un rapport tension-fréquence prédéterminé lorsque le rapport tension-fréquence estimé est inférieur au rapport tension-fréquence prédéterminé.

4. Appareil selon la revendication 3, dans lequel le dispositif de commande (6) augmente la tension et la fréquence de l'onduleur (1) en réponse au rapport tension-fréquence prédéterminé lorsque le rapport tension-fréquence estimé est inférieur au rapport tension-fréquence prédéterminé.

5. Appareil selon l'une quelconque des revendications 1 à 4, dans lequel le dispositif de commande (6) maintient une fréquence de l'onduleur (1) et augmente la tension jusqu'à ce qu'un rapport tension-fréquence estimé atteigne un rapport tension-fréquence prédéterminé lorsque le rapport tension-fréquence estimé est supérieur au rapport tension-fréquence prédéterminé.

6. Appareil selon la revendication 5, dans lequel le dispositif de commande (6) augmente la tension et une fréquence de l'onduleur (1) en réponse au rapport tension-fréquence prédéterminé lorsque le rapport tension-fréquence estimé atteint le rapport tension-fréquence prédéterminé.

FIG. 1

FIG. 2a

FIG. 2b

FIG. 3

FIG. 4

FIG. 5

EP 2 874 305 B1

FIG. 6

FIG. 7

17

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4734634 A
- US 4839589 A